# EUROPÄISCHE PATENTANMELDUNG

(11) **EP 4 282 893 A1**
(43) Veröffentlichungstag der Anmeldung: **29.11.2023**
(21) Anmeldenummer: 22175418.7
(22) Anmeldetag: 25.05.2022
(51) Int. Cl.: C08G 18/79, C08G 18/80

(54) **BLOCKIERTE POLYISOCYANATE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung eines blockierten Polyisocyanates, umfassend eine Umsetzung A) mindestens einer Polyisocyanatkomponente, die mindestens Isocyanurat- und/oder Iminooxadiazindionstrukturen aufweist, mit B) mindestens einem verzweigten aliphatischen Diol und mit C) mindestens einem sekundären Amin mit aliphatischen, cycloaliphatischen und/oder araliphatischen Substituenten, dadurch gekennzeichnet, dass die Komponente B) in einer Menge von mehr als 2 Gew.-%, bezogen auf die Gesamtmenge der Komponenten A) und B) zum Einsatz kommt und die Komponente C) in einer solchen Menge eingesetzt wird, die mindestens 95 mol-% der rechnerisch nach der Umsetzung der Komponenten A) und B) noch vorhandenen Isocyanatgruppen entspricht, sowie die blockierten Polyisocyanate.

## Beschreibung

Blockierte Polyisocyanate, wie sie durch Umsetzung von Isocyanatgruppen mit so genannten Blockierungsmitteln erhalten werden können, sind lange bekannt. Sie lassen sich mit Polyolen zu bei Raumtemperatur lagerstabilen Abmischungen kombinieren. Bei höheren Temperaturen wird das Blockierungsmittel wieder abgespalten und gibt die Isocyanatgruppe für die Vernetzung mit der Polyolkomponente frei.

Solche blockierten Polyisocyanate dienen als Vernetzerkomponenten für Einkomponenten-Polyurethan-Einbrennlacke (1K-PUR) und kommen beispielsweise in der Automobil-Erstlackierung, der Kunststofflackierung und im Coil Coating zum Einsatz. Der Art des verwendeten Blockierungsmittels kommt dabei eine erhebliche Bedeutung zu. So werden Reaktivität, Thermovergilbung und andere Lackeigenschaften im Wesentlichen vom Blockierungsmittel bestimmt. (U. Meier-Westhues et al. "Polyurethanes: Coatings, Adhesives and Sealants", 2nd Revised Edition, Hanover: Vincentz Network, 2019).

Von besonderem Interesse als Blockierungsmittel sind sekundäre Monoamine, da sie besonders niedrige Einbrenntempraturen ermöglichen. Insbesondere die technisch und wirtschaftlich wichtigen Isocyanuratgruppen aufweisenden Polyisocyanate auf Basis linearaliphatischer Diisocyanate, wie z. B. 1,6-Diisocyanatohexan (Hexamethylendiisocyanat, HDI) und 1,5-Diisocyanatopentan (Pentamethylendiisocyanat, PDI), blieben allerdings bis heute in mit sekundären Aminen, wie Diisopropylamin, blockierter Form ohne praktische Bedeutung. Der Grund hierfür ist die Tatsache, dass Lösungen derartiger blockierter Polyisocyanate in den üblichen Lacklösemitteln nicht über längere Zeit lagerstabil sind, da sie eine sehr hohe Neigung zu Verfestigung z.B. durch Auskristallisation des enthaltenen blockierten Polyisocyanats zeigen. (D.A. Wicks, Z.W. Wicks Jr, Progress in Organic Coatings 41 (2001) 1-83*)*

Polyisocyanate, insbesondere 3-Isocyanatomethyl-3,5,5-trimethylcyclohexylisocyanat (IPDI) und Toluylendiisocyanat (TDI), die gegebenenfalls nach Kettenverlängerung mit Diolen und/oder Triolen, mit ausschließlich sekundären Aminen blockiert sind, wurden erstmals in der EP-A 0 096 210 als Vernetzerkomponenten für lösungsmittelhaltige 1K-PUR-Einbrennlacke beschrieben. Als geeignete Blockierungsmittel werden sterisch gehinderte sekundäre Amine, wie z. B. Diisopropylamin, Dicyclohexylamin oder 2,2,6,6-Tetramethylpiperidin, genannt. Als geeignete Ausgangsdiisocyanate werden pauschal auch Isocyanuratpolyisocyanate genannt. Beispiele unter Verwendung Isocyanuratgruppen aufweisender Polyisocyanate linearaliphatischer Diisocyanate, die einen Rückschluss auf die Lagerstabilitäten solcher Produkte in organischer Lösung erlauben würden, finden sich in dieser Veröffentlichung allerdings nicht.

Auch in der EP-A 0 125 438 werden 1K-Bindemittel, deren Vernetzerkomponente aus einem Umsetzungsprodukt von gegebenenfalls mit Polyolen vorverlängerten Polyisocyanaten mit ausschließlich sekundären Aminen als Blockierungsmittel besteht, beschrieben. Diese Bindemittel kommen sowohl für lösemittelhaltige Lacke, für die Pulverlackierung als auch in ihrer protonierten Form für die kathodische Elektrotauchlackierung zum Einsatz. Hinweise auf die Lagerstabilität von Lösungen der blockierten Polyisocyanate finden sich in dieser Veröffentlichung jedoch nicht.

Polyisocyanate, insbesondere isocyanatfunktionelle Prepolymere, die mit sekundären Aminen blockiert sind, sind als Vernetzerkomponente für Polyamine aus der EP-A 0 407 829 bekannt. Als geeignete Ausgangspolyisocyanate zur Herstellung der blockierten Prepolymere werden pauschal auch Biuret- oder Isocyanuratgruppen aufweisende Derivate von HDI genannt, die gegebenenfalls auch vor der Blockierung mit einer unterschüssigen Menge einer niedermolekularen Polyhydroxylverbindung modifiziert werden können. Die Veröffentlichung lässt keinerlei Rückschüsse auf die Lagerstabilität von mit sekundären Aminen blockierten Polyisocyanaten zu.

EP-A 3 643 733 beschreibt spezielle sekundäre Monoamine, die sowohl eine verzweigte Alkylgruppe mit 3 bis 6 Kohlenstoffatomen als auch einen Kohlenwasserstoffsubstituenten mit 1 oder 2 Ethergruppen tragen, als Blockierungsmittel für Isocyanate. Bevorzugte Blockierungsmittel dieses Typs sind N-(Furan-2-ylmethyl)-2-methylpropan-2-amin, 2-Methyl-N-((tetrahydrofuran-2-yl)methyl)propan-2-amin, N-(2-Methoxyethyl)-2-methylpropan-2-amin und N-(tert-Butyl)-1-methoxypropan-2-amin. Die mit diesen Aminen blockierten Isocyanatgruppen werden bei besonders niedrigen Temperaturen wieder freigesetzt. Die Veröffentlichung enthält weder Hinweise auf die mangelnde Kristallisationsstabilität von mit sekundären Aminen blockierten Isocyanuratpolyisocyanaten linearaliphatischer Diisocyanate noch Vorschläge, wie diese zu überwinden ist.

Die hohe Kristallisationstendenz von aminblockierten Isocyanuratpolyisocyanaten linearaliphatischer Diisocyanate lässt sich auf verschiedene Weise vermindern. Ein Konzept ist beispielsweise die sogenannte Mischblockierung, die gleichzeitige Verwendung von zwei oder mehr unterschiedlichen Blockierungsmitteln.

Blockierte Polyisocyanate, deren Isocyanatgruppen zu mindestens 30 Äquivalent-% und zu höchsten 70 Äquivalent-% mit Diisopropylamin, und zu insgesamt 30 bis 70 Äquivalent-% mit mindestens einem CH-aciden Ester und/oder 1,2,4-Triazol blockiert sind, sind Gegenstand der EP-A 0 600 314. Diese Mischblockierung unterbindet die Kristallisationstendenz von z. B. Derivaten von HDI-Polyisocyanuratpolyisocyanaten. Allerdings führen die unterschiedlichen Deblockierungstemperaturen der unterschiedlich blockierten Isocyanatgruppen in der Praxis häufig zu Problemen bei der Verwendung solcher Produkte in 1K-PUR-Beschichtungssystemen. Darüber hinaus können auch die beim Einbrennen solcher Systeme freigesetzten Blockierungsmittelgemische die Lackeigenschaften negativ beeinflussen, weshalb mischblockierte Polyisocyanate nicht allgemein einsetzbar sind.

Eine Möglichkeit zur Herstellung kristallisationsstabiler, ausschließlich aminblockierter Polyisocyanatvernetzer ist nach der Lehre der EP-A 0 900 814 die Umsetzung definierter Mischungen linearaliphatischer und cycloaliphatischer Polyisocyanate mit sekundären Aminen. Unter Verwendung solcher Polyisocyanate hergestellte Lackschichten weisen allerdings ein deutlich anderes Eigenschaftsprofil auf und sind ebenfalls nicht allgemein einsetzbar.

Nach EP-A 1 524 284 sind mit sekundären Aminen blockierte Polyisocyanate, die eine definierte Menge an Biuretstrukturen enthalten, kristallisationsstabil. Geeignete Polyisocyanate sind reine HDI-Biurete oder auch nachträglich biuretisierte HDI-Polyisocyanate mit Isocyanurat- und/oder Iminooxadiazindionstruktur. Diese Polyisocyanate können vor der Blockierung gegebenenfalls anteilig mit gegenüber Isocyanatgruppen reaktiven Verbindungen, wie z. B. nieder- oder höhermolekularen di- oder polyfunktionellen Alkoholen, Aminen oder höhermolekularen Polyhydroxylverbindungen auf Polyester-, Polyether-, Polycarbonat- oder Polyacrylatbasis, umgesetzt werden. Als Blockierungsmittel dienen insbesondere Diisopropylamin, N-tert-Butylbenzylamin, Dicyclohexylamin oder deren Gemische.

Ähnlich kristallisationsstabil verhalten sich nach der Lehre der WO 2004/104065 auch mit sekundären Aminen blockierte Polyisocyanate auf Basis linearaliphatischer Diisocyanate, bei denen ein Teil der bei der Blockierung gebildeten Harnstoffgruppen zu Biuretstrukturen weiter umgesetzt wurden.

Biuretstrukturen enthaltenden Polyisocyanaten gemeinsam ist allerdings ihre gegenüber Isocyanuraten deutlich geringere Temperaturbeständigkeit. Aufgrund von Equilibrierungsreaktionen, die insbesondere unter den im Bereich von Coil-Coating-Anwendungen üblichen Einbrennbedingungen zu auftreten und gegebenenfalls zur Freisetzung von monomeren Diisocyanaten führen können, haben sich solche Produkte im Markt nicht durchsetzen können.

Das Problem der mangelnden Kristallisationsstabilität und hohen Verfestigungsneigung von mit sekundären Monoaminen blockierten Isocyanuratgruppen aufweisenden Polyisocyanaten auf Basis linearaliphatischer Diisocyanate ist bisher nicht zufriedenstellend gelöst. Trotz des hohen Interesses an bei niedrigen Einbrenntemperaturen vernetzenden blockierten Polyisocyanatvernetzern stehen dem Anwender bisher keine aminblockierten HDI- und/oder PDI-Polyisocyanuratpolyisocyanate zur Verfügung.

Wie jetzt überraschend gefunden wurde, lassen sich auch Polyisocyanuratpolyisocyanate auf Basis linearaliphatischer Diisocyanate, wie beispielsweise HDI oder PDI, die mit verzweigten Alkoholen, insbesondere verzweigten Diolen, anteilig urethanisiert wurden, mit sekundären Aminen, wie z. B. Diisopropylamin, zu völlig verfestigungsstabilen, nicht kristallisierenden, blockierten Polyisocyanatvernetzern umsetzen. Diese neuen aminblockierten Polyisocyanate eignen sich insbesondere für Coil-Coating-Anwendungen.

Gegenstand der vorliegenden Erfindung ist ein Verfahren zur Herstellung eines blockierten Polyisocyanates umfassend eine Umsetzung
A) mindestens einer Polyisocyanatkomponente, die mindestens Isocyanurat- und/oder Iminooxadiazindionstrukturen aufweist, mit
B) mindestens einem verzweigten aliphatischen Diol und mit
C) mindestens einem sekundären Amin mit aliphatischen, cycloaliphatischen und/oder araliphatischen Substituenten,
dadurch gekennzeichnet, dass die Komponente B) in einer Menge von mehr als 2 Gew.-%, bezogen auf die Gesamtmenge der Komponenten A) und B) zum Einsatz kommt und die Komponente C) in einer solchen Menge eingesetzt wird, die mindestens 95 mol-% der rechnerisch nach der Umsetzung der Komponenten A) und B) noch vorhandenen Isocyanatgruppen entsprichtt.

Bevorzugt bedeuten erfindungsgemäß die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt. "Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens einer Polyisocyanatkomponente" bedeutet daher beispielsweise, dass nur eine Art von Polyisocyanatkomponente oder mehrere verschiedene Arten von Polyisocyanatkomponenten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %". Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Dabei werden mit dem Begriff "linearaliphatisch" solche Verbindungen bezeichnet, die völlig frei von cyclischen Strukturelementen sind, während der Begriff "alicyclisch" oder "cycloaliphatisch" als gegebenenfalls substituierte, carbocyclische oder heterocyclische Verbindungen oder Einheiten definiert ist, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Für den Fall, dass die Gruppen oder Verbindungen als "gegebenenfalls substituiert" oder "substituiert" offenbart werden, sind geeignete Substituenten -F, -Cl, -Br, -I, -OH, - OCH₃, -OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Die mindestens eine Polyisocyanatkomponente A), die mindestens Isocyanurat- und/oder Iminooxadiazindionstrukturen aufweist, wird im Rahmen der vorliegenden Erfindung auch als Ausgangsverbindung A) oder als Ausgangspolyisocyanat A) oder als Polyisocyanat A) oder als Isocyanurat- und/oder Iminooxadiazindionstrukturen aufweisendes Polyisocyanat A) bezeichnet.

Ausgangsverbindungen A) für das erfindungsgemäße Verfahren sind beliebige, durch Modifizierung linearaliphatischer, cycloaliphatischer, araliphatischer und/oder aromatischer Diisocyanate hergestellte Polyisocyanate, die mindestens Isocyanurat- und/oder Iminooxadiazindionstrukturen aufweisen.

Geeignete Diisocyanate zur Herstellung dieser Polyisocyanate A) sind beliebige, auf verschiedene Weise, beispielsweise durch Phosgenierung der korrespondierenden Diamine in der Flüssig- oder Gasphase oder auf phosgenfreien Weg, wie z. B. durch thermische Urethanspaltung, zugängliche Diisocyanate, insbesondere solche des Molekulargewichtsbereichs 140 bis 400 mit aliphatisch, cycloaliphatisch, araliphatisch und/oder aromatisch gebundenen Isocyanatgruppen, wie z. B. wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol (Xylylendiisocyanat, XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

In einer weiteren bevorzugten Ausführungsform kommen als Polyisocyanatkomponente A) durch Modifizierung linearaliphatischer, cycloaliphatischer, araliphatischer und/oder aromatischer Diisocyanate hergestellte Polyisocyanate, die mindestens Isocyanurat- und/oder Iminooxadiazindionstrukturen aufweisen, zum Einsatz, wobei > 70 Äquivalent-%, bevorzugt > 80 Äquivalent-%, besonders bevorzugt > 90 Äquivalent-%, jeweils bezogen auf den NCO-Gehalt, und ganz besonders bevorzugt ausschließlich linearaliphatische Diisocyanate zur Modifizierung eingesetzt wurden.

In einer weiteren bevorzugten Ausführungsform kommen als Polyisocyanatkomponente A) durch Modifizierung linearaliphatischer Diisocyanate, bevorzugt 1,6-Diisocyanatohexan und/oder 1,5-Diisocyanatopentan, hergestellte Polyisocyanate, die mindestens Isocyanurat- und/oder Iminooxadiazindionstrukturen aufweisen, zum Einsatz.

Bevorzugte Diisocyanate zur Herstellung der Isocyanurat- und/oder Iminooxadiazindionstrukturen aufweisenden Polyisocyanate A) sind solche der genannten Art mit linearaliphatisch und/oder cycloaliphatisch gebundenen Isocyanatgruppen, besonders bevorzugt unverzweigte linearaliphatische Diisocyanate, wie z. B. 1,4-Diisocyanatobutan, 1,5-Diisocyanatopentan, 1,6-Diisocyanatohexan, 1,8-Diisocyanatooctan, 1,9-Diisocyanatononan und 1,10-Diisocyanatodecan. Ganz besonders bevorzugte Diisocyanate sind HDI und/oder PDI.

Bevorzugt ist auch ein Verfahren zur Herstellung eines blockierten Polyisocyanates umfassend eine Umsetzung
A) mindestens einer im Wesentlichen linearaliphatischen Polyisocyanatkomponente, die mindestens Isocyanurat- und/oder Iminooxadiazindionstrukturen aufweist, mit
B) mindestens einem verzweigten aliphatischen Diol und
C) mit mindestens einem sekundären Amin mit aliphatischen, cycloaliphatischen und/oder araliphatischen Substituenten,
dadurch gekennzeichnet, dass die Komponente B) in einer Menge von mehr als 2 Gew.-%, bezogen auf die Gesamtmenge der Komponenten A) und B) zum Einsatz kommt und die Komponente C) in einer solchen Menge eingesetzt wird, die mindestens 95 mol-% der rechnerisch nach der Umsetzung der Komponenten A) und B) noch vorhandenen Isocyanatgruppen entspricht.

Gemäß dieser bevorzugten Ausführungsform ist die Polyisocyanatkomponente A) mindestens eine im Wesentlichen linearaliphatische Polyisocyanatkomponente. "Im Wesentlichen linearaliphatisch" bedeutet in diesem Zusammenhang insbesondere, dass die zur Modifizierung eingesetzten Diisocyanate zu > 70 Äquivalent-%, bevorzugt > 80 Äquivalent-%, besonders bevorzugt > 90 Äquivalent-%, jeweils bezogen auf den NCO-Gehalt, linearaliphatische Diisocyanate sind und ganz besonders bevorzugt ausschließlich linearaliphatische Diisocyanate sind.

Die Herstellung der mindestens Isocyanurat- und/oder Iminooxadiazindionstrukturen aufweisenden Ausgangspolyisocyanate A) für das erfindungsgemäße Verfahren erfolgt auf an sich bekannten Weise durch Modifizierung, insbesondere katalytische Trimerisierung, der genannten aliphatischen, cycloaliphatischen, araliphatischen und/oder aromatischen Diisocyanate. Geeignete Verfahren sind beispielsweise in J. Prakt. Chem. 336 (1994) 185 - 200, in DE-A 1 954 093, DE-A 2 414 413, DE-A 2 452 532, DE-A 2 641 380, DE-A 3 900 053 und DE-A 3 928 503 oder in EP-A 0 336 205, EP-A 0 339 396 und EP-A 0 798 299 beispielhaft beschrieben. In Abhängigkeit vom gewählten Modifizierungsverfahren können die beim erfindungsgemäßen Verfahren eingesetzten Polyisocyanate A) neben neben Isocyanurat- und/oder Iminooxadiazindionstrukturen gegebenenfalls zusätzlich auch Uretdion-, Allophanat-, Biuret-, Urethan- und/oder Oxadiazintrionstrukturen aufweisen.

Bei der Herstellung der Ausgangspolyisocyanate A) schließt sich an die eigentliche Modifizierungsreaktion in der Regel ein weiterer Verfahrensschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren als Ausgangspolyisocyanate A) Polyisocyanate der genannten Art zum Einsatz, die einen Gehalt an monomeren Diisocyanaten von weniger als 5 Gew.-%, vorzugsweise weniger als 0,5 Gew.-%, besonders bevorzugt von weniger als 0,3 Gew.-% aufweisen. Die Rest-Monomeren Gehalte werden nach DIN EN ISO 10283:2007-11 gaschromatographisch mit internem Standard bestimmt.

Die vorstehend als geeignet, bevorzugt, besonders bevorzugt und ganz besonders bevorzugt genannten Polyisocyanate A) enthalten vorzugsweise Isocyanuratstrukturen und weisen eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Beim erfindungsgemäßen Verfahren wird die Polyisocyanatkomponente A), die mindestens Isocyanurat- und/oder Iminooxadiazindionstrukturen aufweist, mit mindestens einem verzweigten aliphatischen Diol B) umgesetzt.

Dabei handelt es sich um beliebige gesättigte oder ungesättigte aliphatische Diole, die einfach oder mehrfach verzweigt sein können, gegebenenfalls Heteroatome, Estergruppen und/oder Carbonatgruppen in der Kette aufweisen und gegebenenfalls weiter substituiert sein können.

In einer weiteren bevorzugten Ausführungsform weist das mindestens eine verzweigte aliphatische Diol 3 bis 36 Kohlenstoffatome auf. Beispielsweise genannt sind einfache Diole, wie 1,2-Propandiol, 1,3-Butandiol, 2-Methyl-1,3-propandiol, 2,2-Dimethyl-1,3-propandiol (Neopentylglykol), 2,2-Dibutyl-1,3-propandiol, 2,2-Dimethyl-1,3-butandiol, 1,2-Hexandiol, 2-Methyl-2,4-pentandiol, 3-Methyl-2,4-pentandiol, 2-Methyl-1,5-pentandiol, 3-Methyl-1,5-pentandiol, 2-Methyl-2-propyl-1,3-propandiol, 2,2-Dimethyl-1,3-hexandiol, 2-Ethyl-1,3-hexandiol, 1,2-Octandiol, 2,2,4-Trimethyl-1,3-pentandiol, 2,2,4-Trimethyl-1,5-pentandiol, 2-Butyl-2-ethyl-1,3-propandiol, 2,2,4- und/oder 2,4,4-Trimethylhexandiol, 2,2-Dibutyl-1,3-propandiol, 1,2-Decandiol, 2-(2-Methyl)butyl-2-propyl-1,3-propandiol, 2,4-Dimethyl-2-propylheptane-1,3-diol und 9-Octadecene-1,12-diol, Dimerdiole, wie sie in an sich bekannter Weise beispielsweise durch Hydrierung von dimeren Fettsäuren und/oder deren Estern erhältlich und kommerziell beispielsweise unter den Bezeichnungen Pripol^{®} 2030, Pripol^{®} 2033 (Croda International Plc, UK) und Sovermol 908 (BASF SE, DE) verfügbar sind, Etherdiole, wie Dipropylenglykol, Tripropylenglykol und Ethylhexylglycerin, Esterdiole, wie 3-Hydroxy-2,2-dimethylpropyl-3-hydroxy-2,2-dimethylpropionat (Hydroxypivalylhydroxypivalat, HPN), Glycerinmonocaprylat und Glycerinmonostearat,oder beliebige Gemische solcher Alkohole.

In einer weiteren bevorzugten Ausführungsform weist das mindestens eine verzweigte aliphatische Diol 4 bis 12 Kohlenstoffatome auf. Besonders bevorzugt sind 2-Methyl-1,3-propandiol, 2,2-Dimethyl-1,3-propandiol, 2-Butyl-2-ethyl-1,3-propandiol (BEPD), 2,2-Dibutyl-1,3-propandiol, 2,2,4-Trimethyl-1,5-pentandiol und 2,2,4- und/oder 2,4,4-Trimethylhexandiol oder beliebige Gemische solcher Alkohole.

Die verzweigten aliphatischen Diole B) kommen beim erfindungsgemäß Verfahren in einer Menge von mehr als 2 Gew.-%, vorzugsweise von 3 bis 20 Gew.-%, besonders bevorzugt von 4 bis 15 Gew.-% und ganz besonders bevorzugt von 5 bis 12 Gew.-%, bezogen auf die Gesamtmenge der Komponenten A) und B) zum Einsatz. Geringere Mengen als 2 Gew.-% reichen nicht aus, um die Kristallisation des blockierten Polyisocyanats dauerhaft zu verhindern, die Verwendung von mehr als 20 Gew.-% kann zu Produkten sehr hoher Viskosität führen, die aufgrund ihres geringen Isocyanatgehaltes im praktischen Einsatz nicht wirtschaftlich sind.

Gegebenenfalls kann die Komponente B) neben den genannten verzweigten aliphatischen Diolen in untergeordneter Menge weitere alkoholische Verbindungen enthalten.

Hierbei handelt es sich beispielsweise um Monoalkohole, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol und Tetrahydrofurfurylalkohol, unverzweigte aliphatische Diole, wie z. B. 1,2-Ethandiol, 1,3-Propandiol, 1,4-Butandiol, 1,5-Pentandiol, 1,6-Hexandiol, 1,7-Heptandiol und 1,8-Octandiol, cycloaliphatische Diole, wie z. B. 1,2- und 1,4-Cyclohexandiol, 1,4-Cyclohexandimethanol, 4,4'-(1-Methylethyliden)-biscyclohexanol, Triole wie z. B. 1,2,3-Propantriol, 1,1,1-Trimethylolethan, 1,2,6-Hexantriol, 1,1,1-Trimethylolpropan, und 1,3,5-Tris(2-hydroxyethyl)isocyanurat, tetrafunktionelle Alkohole, wie z. B. 2,2-Bis(hydroxymethyl)-1,3-propandiol oder beliebige Gemische solcher Alkohole.

Falls überhaupt, kommen diese weiteren alkoholischen Verbindungen beim erfindungsgemäßen Verfahren in Mengen von maximal 25 Gew.-%, vorzugsweis maximal 20 Gew.-%, besonders bevorzugt 15 Gew.-%, bezogen auf die eingesetzte Menge an verzweigten aliphatischen Diolen zum Einsatz.

Dies bedeutet, dass die mittlere OH-Funktionalität der Komponente B) vorzugsweise von 1,6 bis 2,4, besonders bevorzugt von 1,8 bis 2,2, ganz besonders bevorzugt 1,9 bis 2,1 und insbesondere 2,0 beträgt.

Beim erfindungsgemäßen Verfahren kommt als Blockierungsmittel C) mindestens ein sekundäres Amin mit aliphatischen, cycloaliphatischen und/oder araliphatischen Substituenten zum Einsatz.

Hierbei handelt es sich insbesondere um sekundäre Amine der allgemeinen Formel (I) 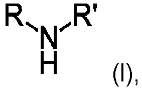
in welcher R und R' unabhängig voneinander
für gleiche oder verschiedene Reste stehen, die gesättigte oder ungesättigte, lineare oder verzweigte, aliphatische, cycloaliphatische oder araliphatische organische Reste mit 1 bis 18 Kohlenstoffatomen bedeuten, die substituiert oder unsubstituiert sind und/oder Sauerstoffatome in der Kette aufweisen, wobei R und R' auch in Kombination untereinander gemeinsam mit dem Stickstoffatom und gegebenenfalls mit weiteren Sauerstoffatomen heterocyclische Ringe mit 5 bis 8 Ringgliedern bilden können, die gegebenenfalls weiter substituiert sein können.

Vorzugsweise handelt es sich bei den Resten R und R' um gesättigte lineare oder verzweigte, aliphatische Reste mit 1 bis 18, besonders bevorzugt 1 bis 6 Kohlenstoffatomen oder cycloaliphatische Kohlenwasserstoffreste mit 6 bis 13, besonders bevorzugt 6 bis 9 Kohlenstoffatomen, wobei R und R' gegebenenfalls auch in Kombination untereinander gemeinsam mit dem Stickstoffatom und gegebenenfalls mit einem weiteren Sauerstoffatom heterocyclische Ringe mit 5 bis 6 Ringgliedern bilden können, die gegebenenfalls weiter substituiert sein können.

Geeignete sekundäre Amine C) für das erfindungsgemäße Verfahren sind beispielsweise Dimethylamin, Diethylamin, Di-n-propylamin, Diisopropylamin, Di-n-butylamin, Diisobutylamin, Di-n-pentylamin, Di-n-hexylamin, N-Methyl-n-propylamin, N-Methyl-n-hexylamin, N-Methylstearylamin, N-Ethyl-n-propylamin, N-Ethylcyclohexylamin, N-Isopropyl-tert.-butylamin, N-Isopropylcyclohexylamin, Dicyclohexylamin, Di-(3,5,5-trimethylcyclohexyl)amin, N-tert-Butylbenzylamin, Dibenzylamin, Piperidin, 2,6-Dimethylpiperidin, 2,2,6,6-Tetramethylpiperidin, 2,2,4,6-Tetramethylpiperidin, Hexahydroazepin, Pyrrolidin, 2,5-Dimethylpyrrolidin oder Morpholin.

Ebenfalls geeignete, wenn auch weniger bevorzugte sekundäre Amine C) sind solche, die neben einer sekundären Aminogruppe weitere gegenüber Isocyanatgruppen reaktive Gruppen tragen, die aber wie beispielsweise Hydroxylgruppen eine geringere Reaktivität gegenüber Isocyanatgruppen aufweisen als sekundäre Aminogruppen. Beispiele für solche sekundären Amine sind Aminoalkohole, wie z. B. Diethanolamin und Diisopropanolamin.

Als sekundäre Amine C) bevorzugt sind Diisopropylamin, Dicyclohexylamin, N-tert-Butylbenzylamin oder beliebige Gemische dieser Amine. Besonders bevorzugt ist Diisopropylamin.

Die sekundären Amine C) kommen beim erfindungsgemäßen Verfahren in einer solchen Menge zum Einsatz, die mindestens 95 mol-%, bevorzugt mindestens 96 mol-%, besonders bevorzugt mindestens 98 mol-% und ganz besonders bevorzugt mindestens 100 mol-% der rechnerisch nach der Umsetzung der Komponenten A) und B) noch vorhandenen Isocyanatgruppen entspricht.

Das erfindungsgemäße Verfahren kann gegebenenfalls in geeigneten, gegenüber Isocyanatgruppen Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, lsopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon, N-Methylpyrrolidon, N-Butylpyrrolidon und N-Methylcaprolactam, oder beliebige Gemische solcher Lösemittel.

Zur Durchführung des erfindungsgemäßen Verfahrens wird die Polyisocyanatkomponente A) mit der Diolkomponente B) und der Aminkomponente C) gegebenenfalls unter Inertgas, wie beispielsweise Stickstoff, und gegebenenfalls in Gegenwart eines geeigneten Lösungsmittels der genannten Art bei einer Temperatur zwischen 0 und 120°C, vorzugsweise 20 bis 100°C, besonders bevorzugt 40 bis 80°C in beliebiger Reihenfolge in den oben genannten Mengenverhältnissen umgesetzt.

Der Verlauf der Umsetzung kann beim erfindungsgemäßen Verfahren z. B. durch titrimetrische Bestimmung des NCO-Gehaltes, vorzugsweise nach DIN EN ISO 11909:2007-05, verfolgt werden.

Die Umsetzung der Polyisocyanatkomponente A) mit der Diolkomponente B) und der Aminkomponente C) kann beim erfindungsgemäßen Verfahren unkatalysiert geschehen, zur Reaktionsbeschleunigung können aber auch die üblichen aus der Polyurethanchemie bekannten Urethanisierungskatalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethyl-piperazin oder Metallsalze wie Eisen(III)-chlorid, Zinkchlorid, Zink-octoat, Zink-2-ethylcaproat, Zink-acetylacetonat, Zinn(II)-octoat, Zinn(II)-ethylcaproat, Zinn(II)-palmitat, Dibutylzinn(IV)-dilaurat, Zirconium-(IV)-2-ethyl-1-hexanoat, Zirconium-(IV)-neodecanoat, Zirconium-(IV)-naphthenat, Zirkonium-(IV)-acetylacetonat, Aluminium-tri(ethylacetoacetat), Wismut(III)-2-ethylhexanoat, Wismut(III)-octoat, Wismut(III)-neodecanoat und Molybdänglykolat.

Diese Katalysatoren kommen gegebenenfalls in Mengen von 0,001 bis 2,0 Gew. %, bevorzugt 0,01 bis 0,2 Gew.-%, bezogen auf die Gesamtmenge der verwendeten Ausgangskomponenten A), B) und C) zum Einsatz.

Falls Katalysatoren zur Reaktionsbeschleunigung mitverwendet werden, können diese gegebenenfalls nach Erreichen des angestrebten NCO-Gehaltes die eingesetzten Katalysatoren, vorzugsweise chemisch, deaktiviert werden. Hierfür geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, p-Toluolsulfonsäuremethylester und -ethylester, Mono- und Dialkylphosphate wie Monotridecylphosphat, Dibutylphosphat und Dioctylhosphat, aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die gegebenenfalls zur Deaktivierung benötigte Menge des Katalysatorgiftes richtet sich dabei nach der Menge des verwendeten Katalysators. Falls überhaupt kommen 0,1 bis 2,0, vorzugsweise 0,4 bis 1,6, besonders bevorzugt 0,8 bis 1,2 Äquivalente und ganz besonders bevorzugt eine äquivalente Menge des Abstoppers, bezogen auf die Menge an eingesetztem Katalysator zum Einsatz.

Im Anschluß an die Umsetzung der Polyisocyanatkomponente A) mit der Diolkomponente B) und der Aminkomponente C), vorzugsweise wenn der Gehalt an freien Isocyanatgruppen weniger als 1,0 Gew.-%, vozugsweise weniger als 0,8 Gew.-%, besonders bevorzugt weniger als 0,3 Gew.-% beträgt, können die blockierten Polyisocyanate gegebenenfalls mit Lösemittel, beispielsweise zur Erniedrigung der Viskosität, weiter verdünnt werden. Dabei können neben den vorstehend genannten Lösemitteln auch alkoholische Lösemittel, wie z. B. n-Butanol oder Isobutylalkohol, verwendet werden, da die Isocyanatgruppen dann weitestgehend, vorzugweise vollständig mit dem Blockierungsmittel abreagiert haben.

Beim erfindungsgemäßen Verfahren können gegebenenfalls weitere Hilfs- und Zusatzstoffe, wie z. B. Antioxidatien oder Lichtschutzmittel mitverwendet werden. Diese können entweder einem oder mehreren der Reaktionspartner A), B) und C) bereits vor Beginn der eigentlichen Umsetzung zugemischt werden. Sie können aber auch zu jedem beliebigen Zeitpunkt während der Umsetzung dem Reaktionsgemisch oder im Anschluß an die Umsetzung den erfindungsgemäßen blockierten Polyisocyanaten zugegeben werden.

Geeignete Antioxidantien sind beispielsweise Phenole, insbesondere sterisch gehinderte Phenole, wie z. B. 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxy-phenyl)-propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäure)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat oder 2,5-Di-tert-amylhydrochinon.

Geeignete Antioxidantien sind auch Thioether, wie z. B. Didodecyl-3,3'-thiodipropionat oder Dioctadecyl-3,3'-thiodipropionat, die vorzugsweise in Kombination mit phenolischen Antioxidatien der genannten Art eingesetzt werden.

Weitere geeignete Antioxidantien sind Phosphite, beispielsweise di- oder vorzugsqweise trisubstituierte Phosphite, wie z. B. Dibutylphosphit, Dibenzylphosphit, Triethylphosphit, Tributylphosphit, Triisodecylphosphit, Trilaurylphosphit, Tris(tridecyl)phosphit, Triphenylphosphit, Tris(2,4-di-tert-butylphenyl)phosphit, Tris(nonylphenyl)phosphit, Diphenylisooctylphosphit, Diphenyl-isodecylphosphit, Diisodecyl-phenylphosphit, Diisooctyloctylphenylphosphit, Phenyl-neopentylglykolphosphit, 2,4,6-Tri-tert.-butylphenyl-(2-butyl-2-ethyl-1,3-propandiol)phosphit, Diisodecyl-pentaerythritdiphosphit, Distearylpentaerythritdiphosphit, Bis(2,4-di-tert.-butylphenyl)-pen-taerythritdiphosphit oder Tetraphenyl-dipropylenglykoldiphosphit.

Geeignete Lichtschutzmittel sind beispielsweise UV-Absorber vom Typ 2-Hydroxyphenylbenzotriazol, solche vom Typ der am Stickstoffatom substituierten oder unsubstituierten HALS-Verbindungen, wie z. B. Tinuvin^{®} 292 oder Tinuvin^{®} 770 DF (BASF SE, Ludwigshafen, DE), oder solche, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind.

Weitere Hilfs- und Zusatzstoffe, die gegebenenfalls beim erfindungsgemäßen Verfahren mitverwendet werden können, sind auch die in EP-A 0 829 500 beschriebenen hydrazidgruppenhaltigen und/oder hydroxyfunktionellen Stabilisatoren, wie z. B. das Additionsprodukt von Hydrazin und Propylencarbonat.

Die genannten Hilfs- und Zusatzstoffe können beim erfindungsgemäßen Verfahren gegebenenfalls einzeln oder auch in beliebigen Kombinationen untereinander in Mengen von 0,001 bis 3,0 Gew.-%, bevorzugt 0,002 bis 2,0 Gew.-%, besonders bevorzugt von 0,005 bis 1,0 Gew.-%, jeweils bezogen auf die Gesamtmenge an Ausgangspolyisocyanat A), eingesetzt werden.

Unabhängig von der Art der Verfahrensführung liefert das erfindungsgemäße Verfahren völlig klare und transparente, mit sekundären Monoaminen blockierte Isocyanuratgruppen aufweisende Polyisocyanate oder organische Lösungen solcher Polyisocyanate, die im Gegensatz zu vergleichbaren Polyisocyanaten, die unter Verwendung der gleichen Ausgangskomponenten aber ohne anteilige Urethanisierung mit verzweigten Alkoholen hergestellt wurden, auch bei längerer Lagerung bei niedrigen Temperaturen, beispielsweise über eine Zeit von 12 Wochen bei 15 bis 25°C, keine Kristallisationstendenz aufweisen.

Gegenstand der Erfindung ist daher auch das nach dem erfindungsgemäßen Verfahren erhältliche oder erhaltene blockierte Polyisocyanat.

Gegenstand der Erfindung ist auch die Verwendung von mehr als 2 Gew.-% mindestens eines verzweigten aliphatischen Diols B), bezogen auf die Gesamtmenge der Komponenten A) und B), zur Stabilisierung mit wenigstens einem sekundären Amin C) blockierter, aliphatischer Polyisocyanate.

Die erfindungsgemäßen blockierten Polyisocyanate stellen wertvolle Ausgangsmaterialien zur Herstellung von Polyurethankunststoffen nach dem Isocyanat-Polyadditionsverfahren dar. Sie eignen sich hervorragend als Vernetzerkomponenten für einkomponentige wärmehärtende lösemittelhaltige oder wässrige Lacksysteme, die insbesondere in der Kunststofflackierung, Automobil-Erstlackierung oder für Coil Coating-Anwendungen zum Einsatz kommen. Sie liefern dabei Beschichtungen, die auch unter Überbrennbedingungen eine sehr gute Vergilbungsresistenz zeigen.

Ein weitere Gegenstand der Erfindung sind daher Einkomponenten-Einbrennsysteme, umfassend
a) mindestens ein erfindungsgemäßes blockiertes Polyisocyanat,
b) mindestens ein gegenüber Isocyanatgruppen reaktives Bindemittel mit im statistischen Mittel mindestens zwei isocyanatreaktiven Gruppen pro Molekül,
c) gegebenenfalls Katalysatoren und
d) gegebenenfalls Lösemittel und/oder gegebenenfalls Hilfs- und Zusatzstoffe.

Schließlich sind auch Substrate, zumindest anteilig beschichtet mit mindestens einem gehärteten erfindungsgemäßen Einkomponenten-Einbrennsystem, ein weiterer Gegenstand der Erfindung.

Für die Herstellung der erfindungsgemäßen Einkomponenten-Einbrennsysteme (1K-Einbrennlacke) werden die erfindungsgemäßen blockierten Polyisocyanate a) mit aus der Lacktechnologie an sich bekannten Lackbindemitteln b), gegebenenfalls unter Mitverwendung von die Vernetzungsreaktion beschleunigenden Katalysatoren c) und gegebenenfalls Lösemitteln und/oder gegebenenfalls Hilfs- und Zusatzstoffen d) vermischt. Das Vermischen muss dabei unterhalb der Temperatur erfolgen, bei der das Blockierungsmittel abgespalten wird da die Freisetzung der Isocyanatgruppen zu einer vorzeitigen Vernetzung des Lacksystems führen würde. Bevorzugt erfolgt die Herstellung der erfindungsgemäßen Einkomponenten-Einbrennsysteme bei Temperaturen zwischen 15 und 100°C.

Als Bindemittelkomponente b) enthalten die erfindungsgemäßen Einkomponenten-Einbrennsysteme mindestens ein gegenüber Isocyanatgruppen reaktives Bindemittel mit im statistischen Mittel mindestens zwei isocyanatreaktiven Gruppen, wie z. B. Hydroxyl-, Mercapto-, Amino- oder Carbonsäuregruppen, pro Molekül.

Bevorzugt handelt es sich bei diesen Bindemitteln b) um die üblichen aus der Polyurethanchemie bekannten Di- und/oder Polyhydroxylverbindungen, wie z. B. Polyesterpolyole, Polyetherpolyole, Polycarbonatpolole und/oder Polyacrylatpolyole, oder beliebige Abmischungen solcher Polyole.

Geeignete Polyole b) sind beispielsweise die üblichen aus der Polyurethanchemie bekannten Di- und/oder Polyhydroxylverbindungen, wie z. B. Polyesterpolyole, Polyetherpolyole, Polycarbonatpolyole und/oder Polyacrylatpolyole, oder beliebige Abmischungen solcher Polyole.

Geeignete Polyesterpolyole b) sind beispielsweise solche eines zahlenmittleren, aus Funktionalität und Hydroxylzahl berechenbaren Molekulargewichtes von 500 bis 10 000 g/mol, vorzugsweise 800 bis 5000 g/mol, besonders bevorzugt 1000 bis 3000 g/mol auf, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder durch Umsetzung mit Lactonen herstellen lassen.

Geeignete mehrwertige Alkohole zur Herstellung von Polyesterpolyolen b) sind beispielsweise 1,2-Ethandiol, 1,2- und 1,3-Propandiol, die isomeren Butandiole, Pentandiole, Hexandiole, Heptandiole und Oktandiole, 2-Ethyl-2-butyl-1,3-propandiol, 2-Ethyl-2-isobutyl-1,3-propandiol, 1,10-Decandiol, 1,12-Dodecandiol, 2,2,4,4-Tetramethylcyclobutan-1,3-diol (TMCD), 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.02,6]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester, oder Mischungen aus mindestens zwei solcher Alkohole.

Geeignete Carbonsäuren bzw. Carbonsäurederivate zur Herstellung der in den erfindungsgemäßen Einkomponenten-Einbrennsystemen einzusetzenden Polyesterpolyole b) sind mehrwertige Carbonsäuren, deren Carbonsäureanhydride und Polycarbonsäureester von niederen Alkoholen. Hierbei handelt es sich um beliebige aromatische, aliphatische oder cycloaliphatische, gesättigte oder ungesättigte Di- und Tricarbonsäuren oder deren Anhydride, insbesondere solche mit 4 bis 18 Kohlenstoffatomen, vorzugsweise mit 4 bis 10 Kohlenstoffatomen, wie z. B. Bernsteinsäure, Bernsteinsäureanhydrid, Glutarsäure, Adipinsäure, Pimelinsäure, Korksäure, Azelainsäure, Sebacinsäure, Decandicarbonsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure, Phthalsäureanhydrid, Isophthalsäure, Terephthalsäure, Trimellitsäure, Tetrahydrophthalsäureanhydrid, Terephthalsäuredimethylester und Terephthalsäure-bisglykolester aber auch dimere und trimere Fettsäuren, die sowohl einzeln als auch in Form beliebiger Gemische untereinander verwendet werden können.

Gegebenenfalls können zu Herstellung der Polyesterpolyole b) in untergeordneter Menge auch Monocarbonsäuren mitverwendet werden, wie z. B. Benzoesäure, Essigsäure, Propionsäure, Buttersäure oder 2-Ethylhexansäure.

Geeignete Polyesterpolyole b) für die erfindungsgemäßen Einkomponenten-Einbrennsysteme sind auch solche, wie sie sich in an sich bekannter Weise aus Lactonen und mehrwertigen Alkoholen, wie z. B. den oben beispielhaft genannten, als Startermolekülen unter Ringöffnung herstellen lassen. Geeignete Lactone zur Herstellung dieser Polyesterpolyole b) sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C. Zur Herstellung dieser Polyesterpolyole b) geeignete Aufbaukomponenten sind beispielsweise die vorstehend für die Herstellung der Polyesterpolyole b) als geeignet genannten mehrwertige Alkohole, mehrwertigen Carbonsäuren und deren Derivate, die auch in Form beliebiger Gemische eingesetzt werden können.

Die Herstellung der Polyesterpolyole b) kann nach an sich bekannten Methoden erfolgen, wie sie beispielsweise in E. Gubbels et al., Polyesters. In: Ullmann's Encyclopedia of Industrial Chemistry, Wiley-VCH Verlag GmbH & Co. KgaA; 2018. URL:https://doi.org/10.1002/14356007.a21_227.pub2 ausführlich beschrieben sind. Gegebenenfalls können dabei katalytische Mengen üblicher Veresterungskatalysatoren, wie z. B. Säuren, Basen oder Übergangsmetallverbindungen, wie z.B. Titantetrabutylat, zum Einsatz gelangen. Die Veresterungsreaktion wird im Allgemeinen in einem Temperaturbereich von ca. 80 bis 260°C, vorzugsweise von 100 bis 230°C, so lange durchgeführt bis die angestrebten Werte für Hydroxyl- und Säurezahl erreicht sind.

Geeignete Polyetherpolyole b) sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie sie oben als geeignet für die Herstellung der Polyesterpolyole b) beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polycarbonatpolyole b) sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole b) sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können. Ebenfalls geeignete Polycarbonatpolyole b) sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2 046 861 durch katalytische Umsetzung von Alkylenoxiden (Epoxiden) und Kohlendioxid in Anwesenheit von H-funktionellen Startersubstanzen erhältlich sind.

Geeignete Polyacrylatpoylole b) sind beispielsweise solche eines mittleren aus Funktionalität und Hydroxylzahl berechenbaren oder durch Gelpermeationschromatografie (GPC) bestimmbaren Molekulargewichtes von 800 bis 50000, vorzugsweise von 1000 bis 20000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole b) sind Vinyl- bzw. Vinylidenmonomere wie z.B. Styrol, α-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Die erfindungsgemäßen Einkomponenten-Einbrennsysteme können gegebenenfalls Katalysatoren c) enthalten. Hierbei handelt es sich insbesondere um die oben zur Beschleunigung der Umsetzung der Polyisocyanatkomponente A) mit der Diolkomponente B) und der Aminkomponente C) bereits als geeignet genannten, in der Isocyanatchemie üblichen Urethanisierungskatalysatoren. Diese Katalysatoren c) kommen in den erfindungsgemäßen Einkomponenten-Einbrennsysteme als Einzelsubstanz oder in Form beliebiger Gemische untereinander in Mengen von 0,005 Gew.-% bis 5 Gew.-%, vorzugsweise von 0,005 Gew.-% bis 2 Gew.-%, besonders bevorzugt von 0,005 Gew.-% bis 1 Gew.-%, berechnet als Summe aller eingesetzten Katalysatoren c) und bezogen auf die Gesamtmenge aus lösemittelfreiem blockierten Polyisocyanat a) und lösemittelfreier Bindemittelkomponente b) zum Einsatz.

Die erfindungsgemäßen Einkomponenten-Einbrennsysteme können gegebenenfalls auch weitere Hilfs- und Zusatzstoffe d) enthalten. Hierbei handelt es sich neben den oben genannten, beim erfindungsgemäßen Verfahren gegebenenfalls mitzuverwendenden Antioxidatien und Lichtschutzmitteln beispielweise um die üblichen, dem Fachmann bekannten Weichmacher, Verlaufshilfsmittel, Rheologieadditive, Slipadditive, Entschäumer, Füllstoffe und/oder Pigmente, die falls überhaupt in der Lacktechnologie üblichen Mengen zum Einsatz kommen. Eine ausführliche Übersicht über derartige geeignete Hilfs- und Zusatzstoffe findet sich beispielsweise in Bodo Müller, "Additive kompakt", Vincentz Network GmbH & Co KG (2009) .

Bei der Herstellung der erfindungsgemäßen Einkomponenten-Einbrennsysteme kommen die Polyisocyanatomponente a) und die Bindemittelkomponente b) vorzugsweise in solchen Mengen zum Einsatz, dass das Äquivalentverhältnis der Summe aus blockierten und nicht blockierten Isocyanatgruppen aus a) zu isocyanatreaktiven Gruppen aus b) von 0,5 : 1 bis 1,5 : 1, besonders bevorzugt von 0,7 : 1 bis 1,3 : 1, ganz besonders bevorzugt von 0,8 : 1 bis 1,2 : 1.

Die der erfindungsgemäßen Einkomponenten-Einbrennsysteme können gegebenenfalls weitere, gegenüber isocyanatreaktiven Gruppen reaktive Verbindungen als zusätzliche Vernetzerkomponente enthalten. Hierbei handelt es sich beispielsweise um Epoxidgruppen enthaltende Verbindungen und/oder Aminoplastharze. Als Aminoplastharze sind die in der Lacktechnologie bekannten Kondensationsprodukte von Melamin und Formaldehyd, bzw. Harnstoff und Formaldehyd anzusehen.

Geeignet sind alle herkömmlichen, nicht oder mit gesättigten Monoalkoholen mit 1 bis 4 Kohlenstoffatomen veretherten Melamin-Formaldehyd-Kondensate. Im Falle der Mitverwendung weiterer Vernetzerkomponenten muss die Menge an Bindemittel mit isocyanatreaktiven Gruppen entsprechend angepasst werden.

Die Applikation der so erhaltenen erfindungsgemäßen Einkomponenten-Einbrennsysteme kann nach an sich bekannten Methoden erfolgen, beispielsweise durch Spritzen, Streichen, Tauchen, Fluten oder mit Hilfe von Walzen oder Rakeln in einer oder mehrerer Schichten.

Als Untergründe kommen dabei beliebige Substrate in Betracht, wie z. B. Metall, Holz, Glas, Stein, keramische Materialien, Verbundwerkstoffe oder Kunststoffe aller Art, die vor der Beschichtung gegebenenfalls auch mit üblichen, bekannten Grundierungen, Füllerlackierungen, Basislackierungen und/oder Klarlackierungen versehen werden können.

Das Aushärten der getrockneten Filme erfolgt durch Einbrennen in Temperaturbereichen von 90 bis 160°C, bevorzugt 110 bis 140°C. Die Trockenfilm-Schichtdicke kann dabei beispielsweise 10 bis 120 µm betragen.

Die erfindungsgemäßen Einkomponenten-Einbrennsysteme können auch für die kontinuierliche Bandbeschichtung eingesetzt werden, wobei maximale Einbrenntemperaturen, dem Fachmann als Peak Metal Temperaturen bekannt, zwischen 130 und 300°C, bevorzugt 190 bis 260°C, und Trockenfilm-Schichtdicken von beispielsweise 3 bis 40 µm erreicht werden können.

Die für das erfindungsgemäße Verfahren als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05. Der Verlauf der Blockierungsreaktion und die NCO-Freiheit der blockierten Polyisocyanate wurde anhand der Abnahme bzw. des Fehlens der Isocyanatbande (ca. 2270 cm⁻¹) im IR-Spektrum verfolgt.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Restmonomerengehalte wurden nach DIN EN ISO 10283:2007-11 gaschromatographisch mit internem Standard gemessen.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den Polyisocyanaten A) vorliegenden Uretdion-, gegebenenfalls Isocyanurat- und/oder Iminooxadiazindionstrukturen wurden aus den Integralen protonenentkoppelter 13C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Im Falle von in CDCl3 gelösten HDI-Polyisocyanaten weisen die einzelnen Strukturelemente folgende chemische Verschiebungen (in ppm) auf: Uretdion: 157.1; Isocyanurat: 148.4; Iminooxadiazindion: 147.8, 144.3 und 135.3; Allophanat: 155.7 und 153.8, Biuret: 155,5; Urethan: 156,3; Oxadiazintrion: 147,8 und 143,9.

### Ausgangsverbindungen

### Polyisocyanate A)

### Ausgangspolyisocyanat A1)

Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

Das Produkt wies folgende Kenndaten und Zusammensetzung auf:

| | |
|---|---|
| NCO-Gehalt: | 21,8% |
| monomeres HDI: | 0,06 % |
| Viskosität (23°C): | 3020 mPas |
| Farbzahl (Hazen): | 8 |

| | |
|---|---|
| Uretdionstrukturen: | 0,8 mol-% |
| Isocyanuratstrukturen: | 90,2 mol-% |
| Iminooxadazindionstrukturen: | 3,8 mol-% |
| Allophanatstrukturen: | 5,2 mol-% |

### Ausgangspolyisocyanat A2)

Polyisocyanat, hergestellt in Anlehnung an Vergleichsbeispiel 2a der WO 2018/153801, durch Trimeriserung von HDI unter Verwendung einer 20 %-igen Lösung von 5-Azonia-spiro[4.5]decaniumhydrogendifluorid in 2-Ethylhexanol als Katalysator, Reaktionsstoppung bei einem NCO-Gehalt der Rohmischung von 44,8 % durch Zugabe einer zur Katalysatormenge äquivalenten Menge einer 70 %igen Lösung von Dodecylbenzolsulfonsäure in Isopropanol und anschließende Abtrennung des nicht umgesetzten HDI durch Dünnschichtdestillation bei einer Temperatur von 130°C und einem Druck von 0,2 mbar.

Das Produkt wies folgende Kenndaten und Zusammensetzung auf:

| | |
|---|---|
| NCO-Gehalt: | 23,5 % |
| monomeres HDI: | 0,11 % |
| Viskosität (23°C): | 720 mPas |
| Farbzahl (Hazen): | 49 |

| | |
|---|---|
| Uretdionstrukturen: | 4,9 mol-% |
| Isocyanuratstrukturen: | 46,7 mol-% |
| Iminooxadazindionstrukturen: | 48,4 mol-% |

### Ausgangspolyisocyanat A3)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8% |
| monomeres PDI: | 0,09 % |
| Viskosität (23 °C): | 9850 mPas |
| Farbzahl (Hazen): | 34 |

| | |
|---|---|
| Uretdionstrukturen: | 4,9 mol-% |
| Isocyanuratstrukturen: | 46,7 mol-% |
| Iminooxadazindionstrukturen: | 48,4 mol-% |

### Beispiel 1 (Vergleich)

289 g (1,50 val) des Isocyanuratstrukturen enthaltenden Ausgangspolyisocyanates A1) wurden bei einer Temperatur von 50 °C unter Rühren und trockenem Stickstoff vorgelegt und über einen Zeitraum von 2 Stunden mit 151,8 g (1,50 val) Diisopropylamin versetzt. Nach beendeter Aminzugabe wurde der Reaktionsansatz mit 188,9 g 1-Methoxypropyl-2-acetat (MPA) verdünnt und eine weitere Stunde bei 50°C bis zur vollständigen Umsetzung der Isocyanatgruppen (IR-Kontrolle, Fehlen der Isocyanatbande bei ca. 2270 cm⁻¹) gerührt. Es lag eine farblose Lösung eines aminblockierten HDI-Polyisocyanuratpolyisocyanats mit folgenden Kenndaten vor:

| | |
|---|---|
| NCO-Gehalt (blockiert): | 10,0 % |
| NCO-Gehalt (frei): | 0,0 % |
| Festkörpergehalt: | 70 Gew.-% |
| Viskosität (23°C): | 8050 mPas |

Nach Abkühlen auf Raumtemperatur trübte die Lösung nach einem Tag ein und war nach fünf Tagen vollständig durchkristallisiert.

### Beispiel 2 (erfindungsgemäß)

770 g (4,00 val) des Isocyanuratstrukturen enthaltenden Ausgangspolyisocyanates A1) wurden bei einer Temperatur von 70°C unter Rühren und trockenem Stickstoff vorgelegt, innerhalb von 15 min mit 58 g (0,73 val) 2-Butyl-2-ethyl-1,3-propandiol (BEPD), entsprechend einer Menge von 7,0 Gew.-% bezogen auf die Gesamtmenge an Polyisocyanat und verzweigtem Diol, versetzt und weiter gerührt, bis der einer vollständigen Urethanisierung entsprechende NCO-Gehalt von 16,9 % erreicht war. Der Reaktionsansatz wurde auf 50°C abgekühlt und 337 g (3,34 val) Diisopropylamin über einen Zeitraum von 4 Stunden zugetropft. Zur Veringerung der während der Blockierungsreaktion deutlich ansteigenden Viskosität wurden über die gesamte Dosierzeit in mehreren Einzelportionen insgesamt 250 g 1-Methoxypropyl-2-acetat (MPA) zugegeben. Nach beendeter Aminzugabe wurde der Reaktionsansatz eine weitere Stunde bei 50°C bis zur vollständigen Umsetzung der Isocyanatgruppen (IR-Kontrolle) gerührt. Anschließend wurde das Produkt mit weiteren 250 g Isobutanol verdünnt. Es lag eine farblose klare Lösung eines erfindungsgemäßen aminblockierten HDI-Polyisocyanuratpolyisocyanats mit folgenden Kenndaten vor:

| | |
|---|---|
| NCO-Gehalt (blockiert): | 8,3 % |
| NCO-Gehalt (frei): | 0,0 % |
| Festkörpergehalt: | 70 Gew.-% |
| Viskosität (23°C): | 13700 mPas |

Nach 12-wöchiger Lagerung bei Raumtemperatur war die Lösung weiterhin völlig klar. Trübungen, Feststoffausfällungen oder Kristallisation wurden nicht beobachtet.

### Beispiele 3 bis 11 (erfindungsgemäß und Vergleich)

Nach dem in Beispiel 2 beschriebenen Verfahren wurden ausgehend von unterschiedlichen Polyisocyanaten durch Urethanisierung mit unterschiedlichen verzweigten Diolen und Diisopropylamin blockierte Polyisocyanate hergestellt, wobei die gesamte Lösemittelmenge bereits vor Beginn der Umsetzung jeweils gemeinsam mit der Polyisocyanatkomponente vorgelegt wurde.

Die nachfolgende Tabelle zeigt die Zusammensetzungen in Gew.-%, Kenndaten und Lagerstabilität der erhaltenden Produkte, nach einer 4-wöchigen Lagerung bei Raumtemperatur.

| Beispiel | | 3 | 4 | 5 (Vergleich) | 6 | 7 | 8 (Vergleich) | 9 | 10 (Vergleich) | 11 |
|---|---|---|---|---|---|---|---|---|---|---|
| Polyisocyanatkomponente | A1) | 274,5 | 274,5 | 283,2 | 274,5 | 264,0 | - | - | - | - |
| | A2) | - | - | - | - | - | 277,0 | 277,0 | - | - |
| | A3) | - | - | - | - | - | - | - | 289,0 | 289,0 |
| Diolkomponente B) | BEPD | 14,4 | - | - | 8,5 | 36,0 | - | - | - | 15,2 |
| | TMPD | - | 14,4 | 5,8 | - | - | - | - | - | - |
| | 2-EH | - | - | - | - | - | - | 20,8 | - | - |
| Anteil B) | [Gew.-%] | 5 | 5 | 2 | 3 | 12 | 0 | 7 | 0 | 5 |
| Diisopropylamin | | 126,0 | 124,2 | 140,7 | 133,1 | 92,9 | 156,6 | 127,8 | 151,5 | 132,3 |
| MPA | | 177,8 | 177,2 | 184,2 | 277,4 | 393,0 | 185,8 | 182,4 | 293,7 | 291,0 |
| NCO-Gehalt (blockiert) | [Gew.-%] | 8,8 | 8,7 | 9,5 | 8,0 | 4,9 | 10,5 | 8,7 | 8,6 | 7,6 |
| NCO-Gehalt (frei) | [Gew.-%] | 0,0 | 0,0 | 0,0 | 0,0 | 0,0 | 0,0 | 0,0 | 0,0 | 0,0 |
| Festkörpergehalt | [Gew.-%] | 70 | 70 | 70 | 60 | 50 | 70 | 70 | 60 | 60 |
| Viskosität | [mPas] | 15000 | 10700 | 7820 | 4570 | 47900 | 2060 | 4600 | 16700 | 23100 |
| Aussehen nach Herstellung | | klar | klar | klar | klar | klar | klar | klar | klar | klar |
| beginnende Eintrübung nach | | - | - | 10 d | - | - | 1 d | - | 1 d | - |
| Aussehen nach 4 Wochen bei RT | | klar | klar | fest | klar | klar | fest | klar | fest | klar |

Die erfindungsgemäßen Beispiele 2, 3, 4, 6, 7, 9 und 11 zeigen, dass sich Isocyanurat- und Iminooxadiazindionstrukturen aufweisende Polyisocyanate, die mit mehr als 2 Gew.-% an verzweigten aliphatischen Diolen, bezogen auf die Gesamtmenge an Polyisocyanat und Diol, anteilig urethanisiert wurden, mit sekundären Aminen wie Diisopropylamin zu klaren blockierten Polyisocyanatvernetzern umsetzen lassen, die sich über einen Zeitraum von 4 Wochen völlig lagerstabil zeigen und keine Kristallisiationstendenz aufweisen.

Dagegen trüben die blockierten Polyisocyanate der Vergleichsbeispiele 1, 5, 8 und 10, die ohne bzw. unter Verwendung von lediglich 2 Gew.-% eines verzweigten Diols hergestellt wurden, bei Raumtemperatur bereits nach kurzer Zeit ein und sind nach 4 Wochen vollständig durchkristallisiert.

## Patentansprüche

1. Verfahren zur Herstellung eines blockierten Polyisocyanates umfassend eine Umsetzung
A) mindestens einer Polyisocyanatkomponente, die mindestens Isocyanurat- und/oder Iminooxadiazindionstrukturen aufweist, mit
B) mindestens einem verzweigten aliphatischen Diol und mit
C) mindestens einem sekundären Amin mit aliphatischen, cycloaliphatischen und/oder araliphatischen Substituenten,
**dadurch gekennzeichnet, dass** die Komponente B) in einer Menge von mehr als 2 Gew.-%, bezogen auf die Gesamtmenge der Komponenten A) und B) zum Einsatz kommt und die Komponente C) in einer solchen Menge eingesetzt wird, die mindestens 95 mol-% der rechnerisch nach der Umsetzung der Komponenten A) und B) noch vorhandenen Isocyanatgruppen entspricht.

2. Verfahren gemäß Anspruch 1, **dadurch gekennzeichnet, dass** als Polyisocyanatkomponente A) durch Modifizierung einfacher linearaliphatischer, cycloaliphatischer, araliphatischer und/oder aromatischer Diisocyanate hergestellte Polyisocyanate, die mindestens Isocyanurat- und/oder Iminooxadiazindionstrukturen aufweisen, zum Einsatz kommen, wobei > 70 Äquivalent-%, bevorzugt > 80 Äquivalent-%, besonders bevorzugt > 90 Äquivalent-%, jeweils bezogen auf den NCO-Gehalt, und ganz besonders bevorzugt ausschließlich linearaliphatische Diisocyanate zur Modifizierung eingesetzt wurden.

3. Verfahren gemäß einem der Ansprüche 1 **dadurch gekennzeichnet, dass** als Polyisocyanatkomponente A) durch Modifizierung linearaliphatischer Diisocyanate, bevorzugt 1,6-Diisocyanatohexan und/oder 1,5-Diisocyanatopentan, hergestellte Polyisocyanate, die mindestens Isocyanurat- und/oder Iminooxadiazindionstrukturen aufweisen, zum Einsatz kommen.

4. Verfahren gemäß einem der Ansprüche 1 bis 3, **dadurch gekennzeichnet, dass** als Polyisocyanatkomponente A) Isocyanuratstrukturen aufweisende Polyisocyanate mit einer mittleren NCO-Funktionalität von 2,3 bis 5,0, vorzugsweise von 2,5 bis 4,5, und einem Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, zum Einsatz kommen.

5. Verfahren gemäß einem der Ansprüche 1 bis 4, **dadurch gekennzeichnet, dass** das mindestens eine verzweigte aliphatische Diol 3 bis 36, vorzugsweise 4 bis 12 Kohlenstoffatome aufweist.

6. Verfahren gemäß einem der Ansprüche 1 bis 5, **dadurch gekennzeichnet, dass** das mindestens eine verzweigte aliphatische Diol 2-Methyl-1,3-propandiol, 2,2-Dimethyl-1,3-propandiol, 2-Butyl-2-ethyl-1,3-propandiol, 2,2-Dibutyl-1,3-propandiol, 2,2,4-Trimethyl-1,5-pentandiol und 2,2,4- und/oder 2,4,4-Trimethylhexandiol oder beliebige Gemische solcher Alkohole ist.

7. Verfahren gemäß einem der Ansprüche 1 bis 6, **dadurch gekennzeichnet, dass** das mindestens eine verzweigte aliphatische Diol in einer Menge von 3 bis 20 Gew.-%, bevorzugt von 4 bis 15 Gew.-% und besonders bevorzugt von 5 bis 12 Gew.-%, bezogen auf die Gesamtmenge der Komponenten A) und B) zum Einsatz kommt.

8. Verfahren gemäß einem der Ansprüche 1 bis 7, **dadurch gekennzeichnet, dass** das mindestens eine sekundäre Amin C) die allgemeine Formel (I) 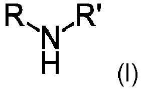 aufweist, in welcher R und R' unabhängig voneinander für gleiche oder verschiedene Reste stehen, die gesättigte oder ungesättigte, lineare oder verzweigte, aliphatische, cycloaliphatische oder araliphatische organische Reste mit 1 bis 18 Kohlenstoffatomen bedeuten, die substituiert oder unsubstituiert sind und/oder Sauerstoffatome in der Kette aufweisen, wobei R und R' auch in Kombination untereinander gemeinsam mit dem Stickstoffatom und gegebenenfalls mit weiteren Sauerstoffatomen heterocyclische Ringe mit 5 bis 8 Ringgliedern bilden können, die gegebenenfalls weiter substituiert sein können.

9. Verfahren gemäß einem der Ansprüche 1 bis 8, **dadurch gekennzeichnet, dass** das mindestens eine sekundäre Amine C) die allgemeine Formel (I) 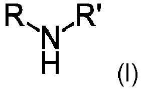 aufweist, in welcher R und R' unabhängig voneinander gleiche oder verschiedene, gesättigte lineare oder verzweigte, aliphatische Reste mit 1 bis 18, besonders bevorzugt 1 bis 6 Kohlenstoffatomen oder cycloaliphatische Kohlenwasserstoffreste mit 6 bis 13, besonders bevorzugt 6 bis 9 Kohlenstoffatomen bedeuten, wobei R und R' gegebenenfalls auch in Kombination untereinander gemeinsam mit dem Stickstoffatom und gegebenenfalls mit einem weiteren Sauerstoffatom heterocyclische Ringe mit 5 bis 6 Ringgliedern bilden können, die gegebenenfalls weiter substituiert sein können.

10. Verfahren gemäß einem der Ansprüche 1 bis 9, **dadurch gekennzeichnet, dass** das mindestens eine sekundäre Amin C) Diisopropylamin, Dicyclohexylamin, N-tert-Butylbenzylamin oder beliebige Gemische dieser Amine ist.

11. Verfahren gemäß Anspruch 1 bis 10, **dadurch gekennzeichnet, dass** das mindestens eine sekundäre Amin C) in einer solchen Menge zum Einsatz kommt, die mindestens 96 mol-%, bevorzugt mindestens 98 mol-%, besonders bevorzugt mindestens 100 mol-% der rechnerisch nach der Umsetzung der Komponenten A) und B) noch vorhandenen Isocyanatgruppen entspricht.

12. Verfahren gemäß einem der Ansprüche 1 bis 11, **dadurch gekennzeichnet, dass** die Polyisocyanatkomponente A) mit der Diolkomponente B) und der Aminkomponente C), gegebenenfalls in Gegenwart geeigneter Lösemittel, bei einer Temperatur zwischen 0 und 120°C, vorzugsweise 20 bis 100°C, besonders bevorzugt 40 bis 80°C in beliebiger Reihenfolge miteinander umgesetzt werden.

13. Blockiertes Polyisocyanat, erhältlich oder erhalten nach einem Verfahren gemäß einem der Ansprüche 1 bis 12.

14. Einkomponenten-Einbrennsystem, umfassend
a) mindestens ein blockiertes Polyisocyanat gemäß Anspruch 13,
b) mindestens ein gegenüber Isocyanatgruppen reaktives Bindemittel mit im statistischen Mittel mindestens zwei isocyanatreaktiven Gruppen pro Molekül,
c) gegebenenfalls Katalysatoren und
d) gegebenenfalls Lösemittel und/oder gegebenenfalls Hilfs- und Zusatzstoffe.

15. Substrate, zumindest anteilig beschichtet mit mindestens einem gehärtetem Einkomponenten-Einbrennsystem gemäß Anspruch 14.
